# EUROPÄISCHE PATENTANMELDUNG

(11) **EP 1 219 371 A2**
(43) Veröffentlichungstag der Anmeldung: **03.07.2002**
(21) Anmeldenummer: 01129032.7
(22) Anmeldetag: 06.12.2001
(51) Int. Cl.: B23D 61/02

(54) **Sägeblatt**

(30) Priorität: 07.12.2000 DE 20020731 U
(71) Anmelder: Schmitt, Paul, 97702 Münnerstadt (DE)
(72) Erfinder: Schmitt, Paul, 97702 Münnerstadt (DE)
(74) Vertreter: Schlagwein, Udo, Dipl.-Ing.

(57) **Zusammenfassung**

Mit einem Sägeblatt in Form eines Grasschneideblattes (1) werden Gräser und kleine Gehölze geschnitten. Dabei besteht immer die Gefahr, dass sich das Grasschneideblatt (1) in zu dicken Ästen festfrisst. Außerdem wird beobachtet, dass mit üblichen Grasschneideblättern das Gras nicht immer sauber geschnitten wird.

Die Erfindung sieht daher vor, dass die Schneidkanten (6) der Zahnbrüste (3) der Zähne (2) des Grasschneidblattes (1) in zwei Reihen von Zahn zu Zahn versetzt angeordnet sind. Dadurch werden die Späne gemäß der Pfeile (10) abwechselnd nach links und rechts abgelenkt, was zu einem deutlich verbesserten Schnitt führt.

## Beschreibung

Die Erfindung bezieht sich auf ein Sägeblatt mit mehreren mit Schneiden versehenen Zähnen, wobei die Schneiden jeweils von zwei keilförmig in eine Schneidkante zulaufenden Schneidflächen gebildet sind und die Schneidkanten in etwa parallel zur Sägeblattebene stehend an der Zahnbrust ausgebildet sind.

Für derartige Sägeblätter gibt es einen weiten Anwendungsbereich. So werden sie z.B. für Freischneidegeräte als sogenannte Grasschneideblätter eingesetzt. Diese Blätter besitzen nur wenige Zähne, die jeweils eine kurze Zahnbrust und einen langgestreckten Zahnrücken aufweisen. Mit derartigen Freischneidern kann Gras, Gestrüpp oder auch kleines Gehölz gemäht werden. Üblicherweise wird die Schneidkante stumpf ausgeführt. Dies führt allerdings dazu, dass die Gräser und die Äste nicht eigentlich zerschnitten, sondern eher durchschlagen werden.

Desweiteren sind Sägeblätter bekannt, die z.B. in Kreissägen eingesetzt werden. Diese haben üblicherweise eine Schneidkante, die parallel zur Drehachse des Sägeblattes verläuft und sich fräsend durch Holz oder Metall arbeitet. Bei dieser Methode ergeben sich je nach Material manchmal unsaubere Schnittflächen.

Die Erfindung beruht auf der Aufgabe, ein Sägeblatt so zu gestalten, dass damit höhere Schnittgeschwindigkeiten erreicht werden können, ein sauberer Schnitt entsteht, die aufzuwendende Energie nicht erhöht wird und das Werkzeug weiterhin leicht geführt werden kann.

Dazu schlägt die Erfindung vor, dass die Schneidkanten in zwei Reihen von Zahn zu Zahn versetzt angeordnet sind.

Es hat sich gezeigt, dass bei einem derartigen Anschliff der Zahnbrust sich ein sauberer Schnitt einstellt. Gleichzeitig wird vermieden, dass das Sägeblatt schief läuft, da es wegen der versetzten Anordnung wechselnd beansprucht wird.

Die Schneidkante an der Zahnbrust kann gerade verlaufen. Je nach Einsatzgebiet kann aber auch eine konkave oder konvexe Form angebracht sein. Die Schneidkante kann außerdem je nach Einsatzgebiet in radialer Richtung verlaufen oder in Arbeitsrichtung nach vorn oder hinten geneigt sein.

In einfacher Weise kann die Schneidkante so ausgeführt werden, dass die zwischen den Reihen liegende innere Schneidfläche schräg zur Sägeblattebene verläuft und die außen liegende Schneidfläche von der unbearbeiteten Seitenfläche des Sägeblattes gebildet ist. Dies hat den Vorteil, dass nur jeweils eine Seite eines Zahnes angeschliffen werden muss, um die erfindungsgemäße Schneidkante zu verwirklichen.

Um ein Festfressen des Sägeblattes zu vermeiden, werden die Zähne geschränkt angeordnet. Diese Methode ist auch bei dem erfindungsgemäßen Schliff anwendbar. Es hat sich allerdings gezeigt, dass der Schrank nicht so groß sein muss wie üblich. Vorzugsweise werden die Zähne jeweils zu der Seite gebogen, an der sich die Schneidkante befindet, so dass diese nach außen weisen.

Der Schnitt kann weiterhin verbessert werden, wenn auch der Zahnrücken mit einer Schneide versehen ist, deren Schneidkante in der Verlängerung der Schneidkante an der Zahnbrust verläuft.

Wie schon oben angegeben, kann diese Erfindung bei einer Vielzahl von Sägeblättern eingesetzt werden, z.B. bei sogenannten Grasschneideblättern oder bei Sägeblättern für eine Kreissäge.

Im Folgenden wird anhand eines Grasschneideblattes die Erfindung näher erläutert. Dazu zeigt
- Fig.1: eine Seitenansicht eines Grasschneideblattes,
- Fig.2: eine Draufsicht auf die abgewickelt dargestellte Kante des Grasschneideblattes.

Das Grasschneideblatt 1 ist mit acht Zähnen 2 versehen, die jeweils eine Zahnbrust 3 und einen Zahnrücken 4 aufweisen. Die Zahnbrust 3 verläuft senkrecht zur Schneiderichtung und radial zur Achse 5 des Sägeblattes. Der Zahnrücken 4 verläuft in einem langgestreckten konkaven Bogen bis zum Fuß des nachfolgenden Zahnes.

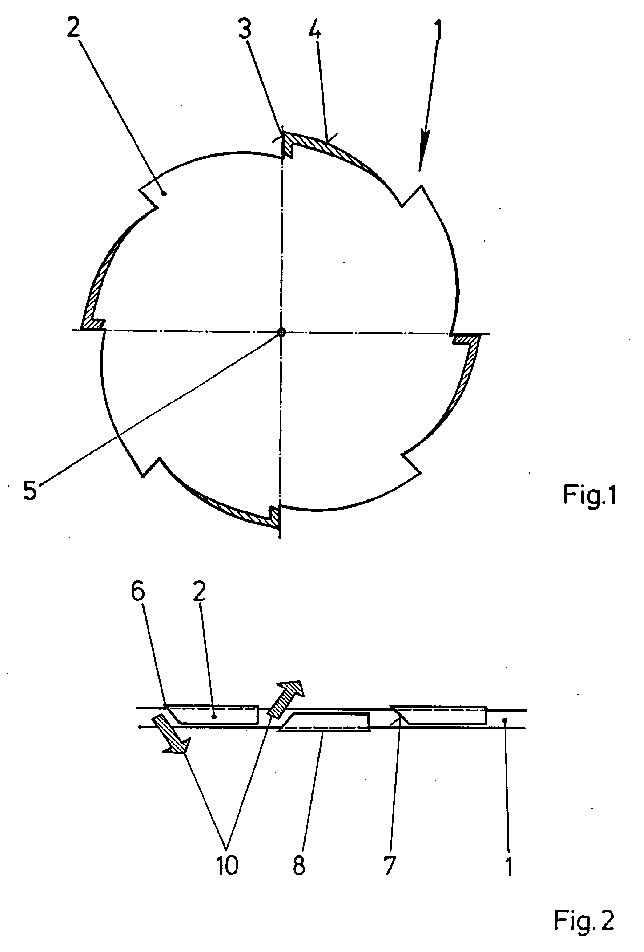

Die Zahnbrust 3 und die Zahnrücken 4 werden wechselnd auf einer Seite angeschliffen, so dass sich jeweils - wie die Figur 2 zeigt - eine Schneidkante 6 ergibt, die einerseits von einer durch den Schliff erzeugten Schneidfläche 7 und andererseits von der unbearbeiteten Seitenfläche des Grasschneideblattes 1 gebildeten Schneidfläche 8 definiert ist.

Die durch den Schliff 9 erzeugten Schneidflächen 7 verlaufen abwechselnd nach links und rechts, so dass die Schneidkanten 6 abwechselnd in zwei Reihen angeordnet sind. Dies hat zur Folge, dass der abgehobene Span gemäß den Pfeilen 10 entlang der schräg verlaufenden Schneidfläche 7 einmal nach links und einmal nach rechts geführt wird. Außerdem liegt eine wechselnde Belastung des Grasschneideblattes 1 vor, die dazu führt, dass das Grasschneideblatt 1 im mittel gerade verläuft und nicht nach links oder rechts gezogen wird.

In der Darstellung der Figur 2 erkennt man außerdem, dass das Grasschneideblatt 1 mit einem Schrank versehen ist, d.h. dass die Zähne abwechselnd nach außen gebogen sind, so dass die Schneidkante 6 gegenüber einer nicht geschränkten Ausführung noch weiter nach außen gesetzt sind.

Die erfindungsgemäße Anordnung kann auch bei sogenannten Mulchgeräten eingesetzt werden. Dazu weisen die Zähne eine etwas längere Zahnbrust auf als in den Figuren dargestellt, außerdem werden alle Zähne des Blattes um ca. 30° nach unten gebogen, wobei aber die versetzte Anordnung der Schneidkanten beibehalten bleibt. Mit einem solchen Blatt ausgerüstetes Mulchgerät eignet sich hervorragend für die Bodenbearbeitung.

Zwar ist ein Grasschneideblatt typischerweise mit acht Zähnen bestückt. Es hat sich aber gezeigt, dass die Erfindung ihre vorteilhafte Wirkung auch bei einer sehr großen Anzahl von Zähnen zeigt. So wurden z.B. mit Schneidblättern mit bis zu 40 Zähnen gute bis sehr gute Ergebnisse im Vergleich zu herkömmlichen Schneidblättern erzielt. Letztlich kommt es nur darauf an, dass die Anzahl der Zähne geradzahlig ist, so dass die Schneidkanten von Zahn zu Zahn jeweils die Reihe wechseln. Wenn auch die wechselseitige Anordnung der Schneidkanten der Zahnbrust die Basis der Erfindung bildet, so ist der Anschliff des Zahnrückens doch nicht zu vernachlässigen. Dabei werden besonders gute Ergebnisse erzielt, wenn der gesamte Zahnrücken einen Anschliff erhält, dessen Schneidkante in der Verlängerung der Schneidkante der Zahnbrust liegt.

### Bezugszeichenliste

- 1: Grasschneideblatt
- 2: Zähne
- 3: Zahnbrust
- 4: Zahnrücken
- 5: Achse

- 6: Schneidkante
- 7: Schneidfläche
- 8: Schneidfläche

- 10: Pfeil

## Patentansprüche

1. Sägeblatt mit mehreren mit Schneiden versehenen Zähnen, wobei die Schneiden jeweils von zwei keilförmig in eine Schneidkante zulaufenden Schneidflächen gebildet werden und die Schneidkanten in etwa parallel zur Sägeblattebene stehend an der Zahnbrust ausgebildet sind, **dadurch gekennzeichnet, dass** die Schneidkanten (6) in zwei Reihen von Zahn zu Zahn versetzt angeordnet sind.

2. Sägeblatt nach Anspruch 1, **dadurch gekennzeichnet, dass** die zwischen den Reihen liegende innere Schneidfläche (7) schräg zur Sägeblattebene verläuft.

3. Sägeblatt nach Anspruch 2, **dadurch gekennzeichnet, dass** die außen liegende Schneidfläche (8) die unbearbeitete Schneidfläche des Sägeblattes ist.

4. Sägeblatt nach Anspruch 2 oder 3, **dadurch gekennzeichnet, dass** die Zähne (2) geschränkt angeordnet sind

5. Sägeblatt nach einem der vorhergehenden Ansprüche, **dadurch gekennzeichnet, dass** der Zahnrücken (4) mit einer Schneide versehen ist, deren Schneidkante in der Verlängerung der Schneidkante (6) an der Zahnbrust (3) verläuft.

6. Sägeblatt nach einem der vorhergehenden Ansprüche, **dadurch gekennzeichnet, dass** das Sägeblatt ein kreisförmiges Blatt ist, wobei die Zähne am Rand des Blattes angeordnet sind.

7. Sägeblatt nach Anspruch 6, **dadurch gekennzeichnet, dass** das Sägeblatt ein Grasschneideblatt (1) ist mit einer kurzen Zahnbrust (3) und einem langezogenen, konkav gebogenen Zahnrücken (4).

8. Sägeblatt nach Anspruch 6, **dadurch gekennzeichnet, dass** das Sägeblatt ein Kreissägeblatt ist mit einer Vielzahl eng aufeinander folgender Zähne.

9. Sägeblatt nach Anspruch 6, **dadurch gekennzeichnet, dass** alle Zähne zur einen Blattseite gebogen sind, so dass es zum Mulchen verwendbar ist.
